Europäisches Patentamt

European Patent Office

Office européen des brevets

(11) Veröffentlichungsnummer: **0 397 143**

**A1**

(12) **EUROPÄISCHE PATENTANMELDUNG**

(21) Anmeldenummer: **90108731.2**

(22) Anmeldetag: **09.05.90**

(51) Int. Cl.5: **H02K 29/08, H02K 21/18, H02K 21/16**

(30) Priorität: **12.05.89 DE 3915539**

(43) Veröffentlichungstag der Anmeldung:
**14.11.90 Patentblatt 90/46**

(84) Benannte Vertragsstaaten:
**DE FR GB IT**

(71) Anmelder: **Standard Elektrik Lorenz Aktiengesellschaft**
**Lorenzstrasse 10**
**D-7000 Stuttgart 40(DE)**

(72) Erfinder: **Hauschild, Andreas**
**Matthias-Grünewald-Weg 4**
**D-8300 Landshut(DE)**

(74) Vertreter: **Pohl, Heribert, Dipl.-Ing et al**
**Standard Elektrik Lorenz AG Patent- und**
**Lizenzwesen Postfach 30 09 29**
**D-7000 Stuttgart 30(DE)**

(54) **Elektronisch kommutierter Gleichstrommotor.**

(57) Es wird ein als Innenläufer ausgebildeter elekronisch kommutierter Gleichstrommotor vorgeschlagen, dessen Ständer aus dem Ständer eines Spaltpolmotors besteht, in welchem die den Spaltpol bildenden Kurzschlußwindungen weggelassen sind. Der Läufer ist als Permanentmagnetläufer ausgebildet.

Fig. 1

EP 0 397 143 A1

## Elektronisch kommutierter Gleichstrommotor

Die Erfindung betrifft einen elektronisch kommutierten Gleichstrommotor mit einem aus einem Ständerblechpaket und einer Ständerwicklung bestehenden Ständer, einem in einer Bohrung des Ständerblechpakets drehbar angeordneten permanentmagnetischen Läufer, einem Läuferstellungssensor und einer elektronischen Schaltung zur Steuerung des Ständerstromes.

Ein solcher Gleichstrommotor ist bekannt (EP-B1-125-502). Obwohl die Vorteile der elektronisch kommutierten Gleichstrommotoren gegenüber den mit Wechselspannung betriebenen Induktionsmotoren allgemein anerkannt sind und sich diese in der Praxis auch allgemein bewährt haben, weisen sie doch eine Reihe von Nachteilen auf. Damit die elektronisch kommutierten Gleichstrommotoren, welche für solche Antriebsanwendungen eingesetzt werden, bei denen im nicht eingeschalteten Zustand kein Gegenmoment auf den Läufer wirkt, aus der Ruhestellung sicher anlaufen, weist der Schnitt des Ständer- und Läuferblechpaketes ein bestimmtes Profil auf, wodurch der Luftspalt relativ groß und in Umfangsrichtung ungleichmäßig ist. Dadurch weist der bekannte Gleichstrommotor einen verhältnismäßig schlechten Wirkungsgrad auf. Außerdem ist bei diesen bekannten elektronisch kommutierten Gleichstrommotoren, da es sich um Außenläufermotoren handelt, das Volumen des Permanentmagneten verhältnismäßig groß. Das begünstigt einerseits das Auftreten von Unwuchten, welches zusätzliche Maßnahmen in der Fertigung erfordert. Außerdem weist dieser bekannte Gleichstrommotor infolge der Massenträgheit des Läufers eine verhältnismäßig lange Hochlaufzeit auf, so daß die Spannungsquelle und die Steuerschaltung während einer verhältnismäßig großen Zeitspanne mit einem erhöhten Strom belastet werden. Weiterhin kann der bekannte Gleichstrommotor konstruktionsbedingt nur auf der von der Abtriebsseite entgegengesetzten Seite befestigt werden, welches seine Anwendung für einige Anwendungsfälle verhindert oder kostspielige Hilfskonstruktionen erfordert.

Der Erfindung liegt daher das technische Problem zugrunde, einen elektronisch kommutierten Gleichstrommotor der eingangs beschriebenen Art derart zu verbessern, daß er wesentlich einfacher und kostengünstiger herzustellen ist und außerdem einen besseren elektrischen Wirkungsgrad aufweist.

Dieses technische Problem wird erfindungsgemäß dadurch gelöst, daß die Läuferbohrung zylindrisch mit glatten Innenflächen ausgebildet ist, das Ständerblechpaket außerhalb der Läuferbohrung an wenigstens zwei einander diametral gegenüberliegenden Stellen Einschnürungen aufweist und der Läufer aus der Läuferwelle und einem auf dieser drehfest angeordneten, aus einem magnetisierbaren Werkstoff bestehenden zylindrischen Läuferkörper zusammengesetzt ist, auf dessen Oberfläche ein Permanentmagnet angeordnet ist.

Bei dem erfindungsgemäßen elektronisch kommutierten Gleichstrommotor handelt es sich um einen Innenläufermotor, welcher einen gleichmäßigen Luftspalt zwischen Ständer und Läufer aufweist. Durch dieses Merkmal wird ein Optimum der magnetischen Induktion in den Antrieb des Läufers umgesetzt.

Der neue Gleichstrommotor kann außerdem unter Verwendung von solchen Teilen kostengünstig hergestellt werden, welche bereits bei der Herstellung von Wechselstrom-Induktionsmotoren in sehr großer Menge hergestellt und verwendet werden.

Vorteilhafte Einzelheiten der Erfindung sind in den Ansprüchen 2 bis 7 enthalten, welche nachstehend anhand der Figuren 1 bis 7 erläutert ist. Es zeigen:

Fig. 1 schematisch den Aufbau des erfindungsgemäßen Gleichstrommotors,

Fig. 2 ein anders ausgebildetes Detail des Gleichstrommotors gemäß Fig. 1,

Fig. 3 die Seitenansicht eines erfindungsgemäßen Gleichstrommotors,

Fig. 4 das Diagramm des magnetischen Widerstandes zwischen Ständer und Läufer des erfindungsgemäßen Gleichstrommotors über dem Umfang der Läuferbohrung,

Fig. 5 das Diagramm des Läuferdrehmomentes des erfindungsgemäßen Gleichstrommotors in Abhängigkeit von der Läuferstellung,

Fig. 6 eine andere Ausgestaltung des Ständers für den erfindungsgemäßen Gleichstrommotor und

Fig. 7 eine weitere Ausgestaltung des Ständers für den erfindungsgemäßen Gleichstrommotor.

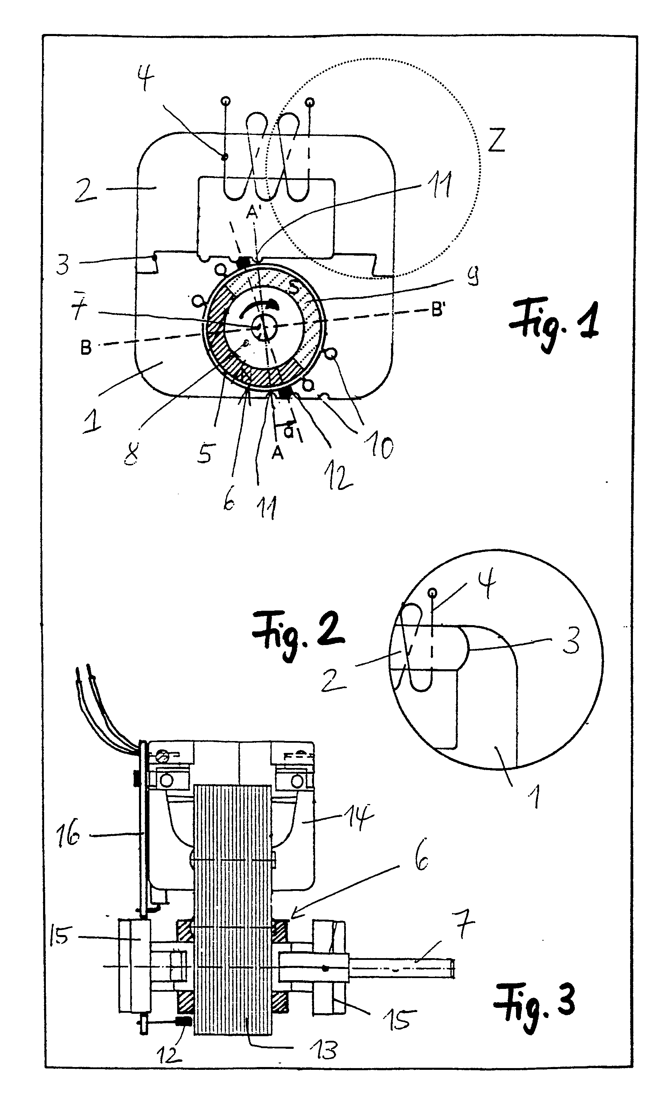

Wie aus Fig. 1 zu erkennen, besteht das Ständerblechpaket aus dem Polpaket 1 und dem Jochpaket 2, welche durch eine schwalbenschwanzartige Verbindung 3 miteinander verbunden, beispielsweise verpreßt sind. Auf dem Jochpaket 2 ist die Ständerwicklung 4 angeordnet, welche beispielsweise auf einen Spulenkörper gewickelt ist. Das Jochpaket 2 ist mit der Läuferbohrung 5 versehen, in welcher der Läufer 6 drehbar angeordnet ist. Der Läufer 6 besteht aus der Läuferwelle 7, dem drehfest auf dieser befestigten Läuferkörper 8 aus einem magnetisierbaren Werkstoff und dem auf dessen Oberfläche angeordneten zweipoligen Permanentmagnet 9. Bei dem Ständer handelt es sich um den vollständigen Ständer eines Spaltpolmotors. Dies ist an den Nuten und Schlitzen 10 zu erkennen, in welchen beim Spaltpolmotor die den Spaltpol bildenden Kurzschlußwindungen angeordnet sind. Die Nuten und Schlitze 10 haben beim erfindungsgemäßen Motor keine Funktion. Eine Funktion haben jedoch die Einschnürungen 11, welche bei einem Spaltpolmotor die Streustege bilden. Bei dem erfindungsgemäßen Motor ist die durch die Einschnürungen 11 gelegte Linie A-A' die neutrale Achse des Motors, welche die Trennlinie zwischen den beiden Ständerpolen darstellt. In Abhängigkeit von der Polung der an der Ständerwicklung 4 angelegten Spannung wirkt das Polpaket auf der einen Seite der neutralen Achse als Nordpol und auf der anderen Seite als Südpol.

In der Nähe der neutralen Achse A-A' ist auch der Läuferstellungssensor 12 angeordnet. Seine Position ist um den Winkel a entgegen der Läuferdrehrichtung (durch den Pfeil im Läufer angezeigt) versetzt. Der Läuferstellungssensor kann auch die diagonal gegenüberliegende Position einnehmen; es muß dann eine andere Ansteuerung der elektronischen Kommutierungsschaltung gewählt werden.

Wie Fig. 1 verdeutlicht, kann für die Herstellung des erfindungsgemäßen elektronich kommutierten Gleichstrommotors der Ständer eines in sehr großen Stückzahlen hergestellten Spaltpolmotors unverändert übernommen werden. Falls für die Herstellung der Ständerbleche eigene Stanzwerkzeuge verwendet werden, können bei den Blechen die Nuten und Schlitze 10 entfallen. In jedem Fall sind mit dem erfindungsgemäßen Motor die Voraussetzungen für eine kostengünstige Fertigung von elektronisch kommutierten Gleichstrommotoren geschaffen.

Bei der in Fig. 1 gezeigten Ausführungsform des Ständers muß die Ständerwicklung 4 auf dem Jochpaket 2 gewickelt werden, nachdem ein geteilter Spulenkörper auf das Jochpaket aufgesetzt worden ist.

Wenn dagegen eine Verbindung 3 zwischen Polpaket 1 und Jochpaket 2 verwendet wird, wie sie in Fig. 2 verdeutlicht ist (Fig. 2 entspricht dem Ausschnitt Z in Fig. 1 bei einem anderen Ausführungsbeispiel), dann kann ein ungeteilter Spulenkörper für die Ständerwicklung verwendet werden. Dieser wird bewickelt und erst danach auf das Jochpaket 1 aufgeschoben.

Aus Fig. 3 ist ein fertiger, elektronisch kommutierter Gleichstrommotor gemäß der Erfindung zu erkennen. Auf dem Ständerblechpaket 13 ist die auf den Spulenkörper 14 gewickelte Ständerwicklung angeordnet. Der Läufer 6 mit der Läuferwelle 7 ist in den am Ständerblechpaket 13 befestigten Lagern 15 drehbar gelagert.

Wie in Fig. 3 deutlich zu erkennen, überragt der Läufer 6 beide Enden des Ständerblechpakets 13. Auf der einen Seite des Ständers ist nahe dem überragenden Ende des Läufers 6 der Läuferstellungssensor 12 angeordnet, welcher mit der auf einer Leiterplatte 16 angeordneten Kommutierungsschaltung verbunden ist. Die Leiterplatte 16 ist am Spulenkörper 14 befestigt.

Das Diagramm in Fig. 4 zeigt den Verlauf des magnetischen Widerstandes zwischen Ständer und Läufer beim erfindungsgemäßen Motor. Wenn sich der Polwechsel (Übergang zwischen Nord- und Südpol) des permanentmagnetischen Läufers im Bereich der neutralen Achse A-A' befindet, weist der magnetische Widerstand zwischen Ständer und Läufer Maxima auf. Die Minima des magnetischen Widerstandes liegen auf der Linie B-B'. Diese Linie steht senkrecht auf der Linie A-A', wie aus Fig. 1 ersichtlich. Wenn der Läufer nach dem Abschalten des Motors ohne Gegenmoment auslaufen kann, dann bleibt der Läufer in einer solchen Ruhelage stehen, daß die Polwechsel mit der Linie B-B' fluchten; das ist die stabile Ruhelage des Läufers, aus welcher er wieder sicher anläuft.

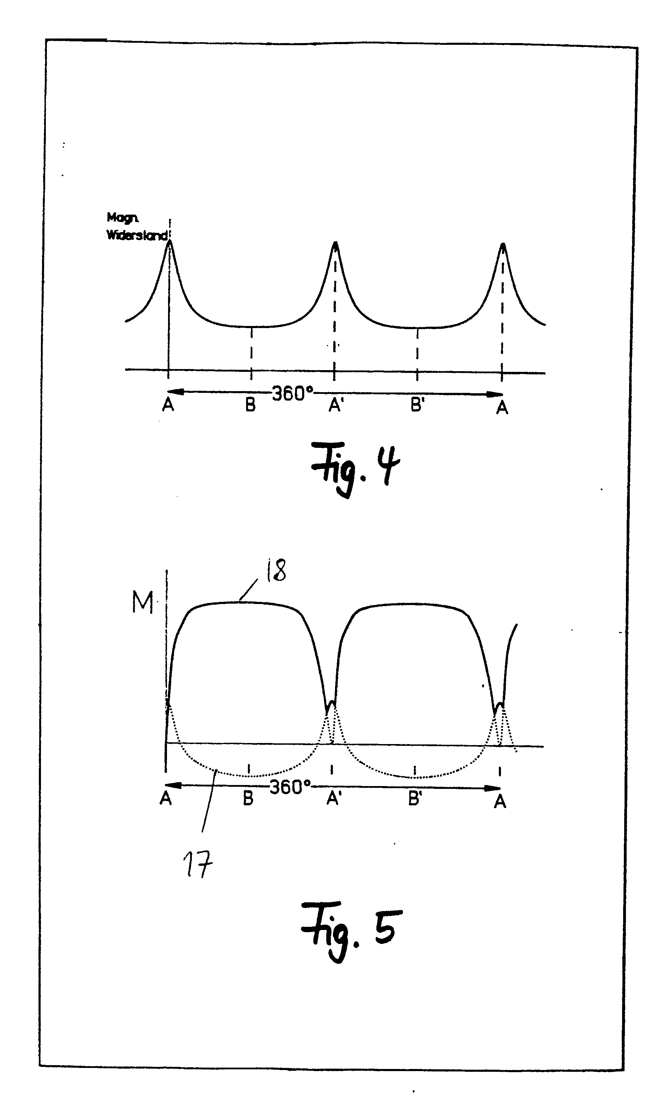

Der über den Umfang der Läuferbohrung nicht konstante magnetische Widerstand zwischen Ständer und Läufer bewirkt ein ebenso nicht konstantes Reluktanzmoment 17, dessen Verlauf aus dem Diagramm in Fig. 5 ersichtlich ist und welches das von der Ständerwicklung erzeugte Drehmoment teils unterstützt und teils diesem entgegenwirkt. Insgesamt hat das Motordrehmoment 18 gemäß Fig. 5 einen Verlauf, welcher durch die ausgezogene Linie verdeutlicht ist.

Die Einschnürungen 11 bilden bei an Spannung gelegter Ständerwicklung 4 für den von diesem erzeugten magnetischen Fluß einen Kurzschluß. Da aber die Querschnittsfläche des Polpakets 1 bei den Einschnürungen 11 sehr gering im Verhältnis zur übrigen Querschnittsfläche des Polpakets 1 ist, geht dieser Teil des Polpakets 1 schon bei geringen Wicklungsströmen in die magnetische Sättigung, d.h. der Stromanteil für diesen Teil des Motors bleibt im Unterschied zum übrigen Motorstrom auf einem konstanten Wert. Man kann davon ausgehen, daß dieser Stromanteil bei etwa 5 - 10% des Nennstroms liegt. Messungen haben ergeben, daß trotz dieser Verluste der Wirkungsgrad des erfindungsgemäßen elektronisch kommutierten Gleichstrommotors wenigstens doppelt so hoch ist, wie ihn ein mit dem gleichen Ständer aufgebauter Spaltpolmotor erreicht.

Der in Fig. 5 gezeigte Verlauf des Motordrehmoments 18 gilt für den Fall, daß der Läuferstellungssensor 12 auf der neutralen Achse A-A' angeordnet ist. Es hat sich jedoch gezeigt, daß diese Position zwar einen Motorbetrieb zuläßt, aber zu keinem optimalen Wirkungsgrad des Motors führt. Ursache dafür ist die durch die Motorgeometrie verursachte, relativ hohe Wicklungsinduktivität der Ständerwicklung. Fließt ein Strom durch die Ständerwicklung und wird der Stromfluß unterbrochen, versucht die in der Wicklungsinduktivität gebundene magnetische Energie den Stromfluß aufrecht zu erhalten. In den für elektronisch kommutierte Gleichstrommotore üblichen Kommutierungsschaltungen sind dafür spezielle Schaltelemente - sogenannte Freilaufdioden - vorhanden, die über einen Stromfluß in ein Speichermedium - üblicherweise einen Kondensator - die magnetische Energie abbauen. Das bedeutet aber auch, daß in dieser Zeitspanne kein Stromfluß in der entgegengesetzten Richtung bzw. in einem magnetisch gekoppelten zweiten Wicklungsstrang stattfinden kann. Dadurch verschiebt sich der effektive Kommutierungszeitpunkt des Motors von der neutralen Zone A-A′ in Drehrichtung des Motors. Das aber führt zu einer Minderung des Wirkungsgrades. Um diesen Effekt zu kompensieren, wird der Schaltzeitpunkt des Läuferstellungssensors 12 so verändert, daß der effektive Kommutierungszeitpunkt bei Nenndrehzahl mit der neutralen Achse A-A′ des Motors übereinstimmt. Das wird dadurch erreicht, daß der Läuferstellungssensor 12 um einen Winkel a entgegen der Drehrichtung des Motors versetzt wird. Der Betrag des Winkels a ist von der elektrischen Zeitkonstante der Motorwicklung abhängig. Er dürfte zwischen 10 und 20° liegen.

Für die elektronische Kommutierung des erfindungsgemäßen Gleichstrommotors können die bekannten Schaltungen verwendet werden. Soll der Motor mit einer bipolaren Ansteuerung betrieben werden, dann ist lediglich eine Wicklung als Ständerwicklung erforderlich. Soll der Motor dagegen mit einer unipolaren Ansteuerung betrieben werden, so sind zwei getrennte Wicklungsstränge als Ständerwicklung erforderlich.

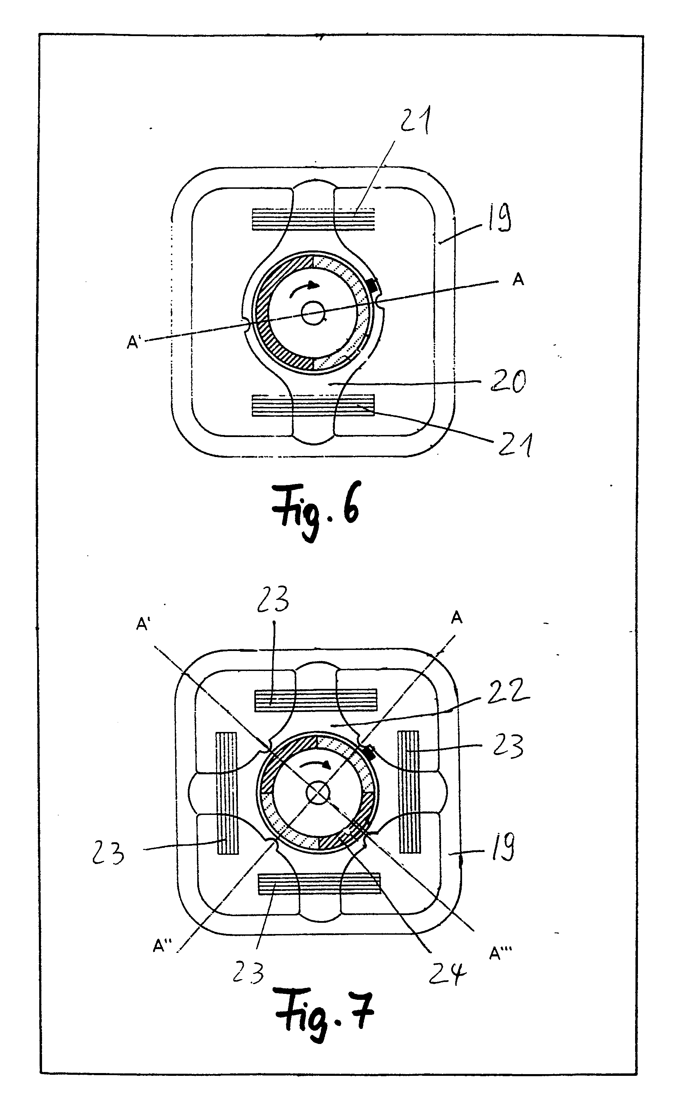

In den Figuren 6 und 7 sind weitere Ausführungsformen des erfindungsgemäßen elektronisch kommutierten Gleichstrommotors gezeigt. Während es sich bei der in Fig. 1 gezeigten Ausführungsform um einen asymmetrischen Ständer handelt, ist in Fig. 6 ein zweipoliger Motor mit einem symmetrischen Ständer gezeigt. Er besitzt ein etwa quadratisches, rahmenförmiges Jochpaket 19, in dem das Polpaket 20 mit der Läuferbohrung angeordnet ist. Die Ständerwicklungen 21 sind zwischen Läuferbohrung und Jochpaket 19 auf dem Polpaket angeordnet. Diese Ausführungsform gestattet es, daß die Ständerwicklungen 21 getrennt von Polpaket und Jochpaket hergestellt werden.

Die in Fig. 7 gezeigte Ausführungsform ist die vierpolige Ausführungsform der Ausführungsform gemäß Fig. 6. Das Polpaket 22 ist bei diesem Ausführungsbeispiel kreuzförmig ausgebildet. Es sind vier Ständerwicklungen 23 vorhanden und der Läufer 24 ist vierpolig ausgebildet. Die vierpolige Ausführungsform des Motors gemäß Fig. 7 besitzt zwei neutrale Achsen (A-A″, A′-A‴).

In den Blechschnitten gemäß Fig. 6 und 7 sind nur die Einschnürungen 11 eingezeichnet. Die Nuten und Schlitze 10 gemäß Fig. 1 sind weggelassen worden. Sie können jedoch auch vorhanden sein, wenn Bleche aus der Produktion von Wechselstrommotoren für den Ständer verwendet werden.

Bei den in den Figuren 6 und 7 gezeigten Ausführungsformen weist das Jochpaket 19 eine etwa quadratische Gestalt auf. Das Jochpaket 19 kann aber auch eine kreisförmige Gestalt (Rundmotor) aufweisen.

## Ansprüche

1. Elektronisch kommutierter Gleichstrommotor mit einem aus einem Ständerblechpaket und einer Ständerwicklung bestehenden Ständer, einem in einer Bohrung des Ständerblechpakets drehbar angeordneten permanentmagnetischen Läufer, einem Läuferstellungssensor und einer elektronischen Schaltung zur Steuerung des Ständerstromes, **dadurch gekennzeichnet,** daß die Läuferbohrung (5) zylindrisch mit glatten Innenflächen ausgebildet ist, das Ständerblechpaket außerhalb der Läuferbohrung (5) an wenigstens zwei einander diametral gegenüberliegenden Stellen Einschnürungen (11) aufweist und der Läufer (6) aus der Läuferwelle (7) und einem auf dieser drehfest angeordneten, aus einem magnetisierbaren Werkstoff bestehenden zylindrischen Läuferkörper (8) zusammengesetzt ist, auf dessen Oberfläche ein Permanentmagnet (9) angeordnet ist.

2. Gleichstrommotor nach Anspruch 1, dadurch gekennzeichnet, daß die Länge des permanentmagnetischen Läufers (6) größer als die Länge der Läuferbohrung (5) ist und der Läufer (6) derart in der Läuferbohrung (5) angeordnet ist, daß er beidseitig um die gleiche Länge über die Enden der Läuferbohrung (5) übersteht.

3. Gleichstrommotor nach den Ansprüchen 1 und 2, dadurch gekennzeichnet, daß der Läuferstellungssensor (12) um einen kleinen Winkel (a) von einer Einschnürung (11) aus in zur Drehrichtung des Läufers entgegengesetzten Richtung versetzt angeordnet ist.

4. Gleichstrommotor nach den Ansprüchen 1 bis 3, dadurch gekennzeichnet, daß das Ständerblechpaket aus einem etwa rechteckigen Polpaket (1) mit einer in ihm symmetrisch angeordneten Läuferbohrung (5) und einem etwa C-förmigen, die Ständerwicklung (4) tragenden Jochpaket (2) besteht, welche durch Preßsitz miteinander verbunden sind.

5. Gleichstrommotor nach den Ansprüchen 1 bis 3, dadurch gekennzeichnet, daß das Ständerblechpaket aus einem etwa C-förmigen Polpaket (1) mit einer in seinem mittleren Schenkel symmetrisch angeordneten Läuferbohrung (5) und einem etwa stabförmigen, die Ständerwicklung tragenden Jochpaket (2) besteht, welche durch Preßsitz miteinander verbunden sind.

6. Gleichstrommotor nach den Ansprüchen 1 bis 3, dadurch gekennzeichnet, daß das Ständerblechpaket aus einem rahmenförmigen Jochpaket (19) besteht, in dem zwischen den Mitten von zwei seiner, sich gegenüberliegender Schenkel das Polpaket (20) mit einer Läuferbohrung im Zentrum und Ständerwicklungen (21) auf dem Polpaket zwischen Läuferbohrung und Jochpaket angeordnet sind.

7. Gleichstrommotor nach den Ansprüchen 1 bis 3, dadurch gekennzeichnet, daß das Ständerblechpaket aus einem rahmenförmigen Jochpaket (19) besteht, in dem zwischen den Mitten der Schenkel ein kreuzförmiges Polpaket (22) mit einer Läuferbohrung im Zentrum und Ständerwicklungen (23) auf den Armen des Kreuzes angeordnet sind.

Fig. 1

Fig. 2

Fig. 3

Fig. 4

Fig. 5

**Fig. 6**

**Fig. 7**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN<br>vol. 12, no. 447 (E-685)(3294) 24 November 1988,<br>& JP-A-63 174545 (SANYO ELECTRIC CO) 19 Juli 1988,<br>* das ganze Dokument * | 1, 3. | H02K29/08<br>H02K21/18<br>H02K21/16 |
| Y | | 2, 4-7. | |
| | --- | | |
| Y | US-A-4758751 (TOSHIRO HOSOYA ET AL)<br>* Spalte 3, Zeile 12 - Spalte 8, Zeile 27; Figuren 1-16. * | 2, 6, 7. | |
| | --- | | |
| Y | US-A-4600864 (HIRONOBU SATO)<br>* Spalte 4, Zeile 5 - Spalte 8, Zeile 29; Figuren 1A-8. * | 5. | |
| | --- | | |
| Y | US-A-4398107 (YASUHIRO FUKUSHIMA)<br>* Figuren 2-17. * | 4. | |
| | --- | | |
| P,X | PATENT ABSTRACTS OF JAPAN<br>vol. 13, no. 594 (E-867)(3942) 27 Dezember 1989,<br>& JP-A-1 248948 (MATSUSHITA) 04 Oktober 1989,<br>* das ganze Dokument * | 1, 6, 7. | |
| | ----- | | RECHERCHIERTE SACHGEBIETE (Int. Cl.5)<br><br>H02K |

Der vorliegende Recherchenbericht wurde für alle Patentansprüche erstellt

| Recherchenort | Abschlußdatum der Recherche | Prüfer |
|---|---|---|
| DEN HAAG | 03 AUGUST 1990 | TIO K.H. |